# EUROPEAN PATENT SPECIFICATION

(11) **EP 2 887 614 B1**
(45) Date of publication and mention of the grant of the patent: **28.10.2020**
(21) Application number: 14199306.3
(22) Date of filing: 19.12.2014
(51) Int. Cl.: H04L 29/06

(54) **Telecommunications networks**
Telekommunikationsnetzwerke
Réseaux de télécommunications

(30) Priority: 20.12.2013 US 201314137249
(43) Date of publication of application: 24.06.2015
(73) Proprietor: Vodafone IP Licensing Limited, Newbury, Berkshire RG14 2FN (GB); Cisco Technology, Inc., San Jose, CA 95134 (US)
(72) Inventor: Bindrim, Walter, London, W2 6BY (GB); Moughton, John, London, W26BY (GB); Schubert, Martin, San Jose, California 95134 (US); Kaczmarska, Margaret, San Jose, California 95134 (US); Gupta, Varini, San Jose, California 95134 (US)
(74) Representative: Boult Wade Tennant LLP

(56) References cited:
- EP-A1- 2 315 412
- WO-A1-2012/140135
- WO-A2-2013/164474

## Description

### TECHNICAL FIELD

The present invention relates to a mobile telecommunications network including a network core operable to provide core network functions; and a radio access network having radio means for wireless communication with mobile terminals registered with the telecommunications network and control means operable to host a plurality of applications, functions or services for use by users of the mobile terminals; wherein the control means includes a client function and the network core includes a director function; and to a corresponding method.

### BACKGROUND TO THE INVENTION

Conventional mobile telephone communications networks have architectures that are hierarchical and traditionally expensive to scale. Many of the network elements, such as the BTS, routers, BSC/RNC etc. are partly proprietary: devices of one manufacturer often do not interface with devices from another manufacturer. This makes it difficult to introduce new capabilities into the network as a fully standardised interface will be required for devices from each manufacturer. Further, conventional base stations are not capable of intelligent local routing or processing. Furthermore, the capacity of existing networks is not always used effectively. For example, many cell sites are under used, whilst others are heavily used.

The current cellular network architecture has the following disadvantages:-
- Hierarchical and expensive to scale
- Backhaul is a major problem
- Proprietary platforms: BTS, BSC/RNC, SGSN etc
- Closed nodes and interfaces
- Very limited application or customer awareness (except for QoS priority)
- No intelligent local routing or processing
- Inefficient use of installed capacity

There is therefore a need to overcome or ameliorate at least one of the problems of the prior art. In particular there is a need to address the needs of both the network operators and the users in improving the provision of mobile broadband data services.

Today mobile service delivery is provided through the mobile operator's packet core. Such a packet core may host a series of applications for enhancing the mobile service. To offer some of the applications, e.g. caching, closer to the user, the Applicant proposed to move potential applications on to "General Purpose Hardware Platform" hardware located at the edge of the radio access network.

EP2315412 describes the introduction of a novel control means or Platform (known as a Smart Access Vision (SAVi) platform) at the network edge. To open the radio access part a "General Purpose Hardware Platform" may be implemented at the network edge. This may allow operators to split the functions of an Radio Network Controller (RNC) and/or a (e)NodeB between hardware and software. As a consequence operators have the capability to place applications and content directly at the edge of the network. The SAVi concept also introduces new functions in the network core.

SAVi may enable a mobile operator to deploy (in-line) services in radio access networks nodes such as base stations (e.g. eNodeB) and radio network controllers. Deploying such services in the radio access network can enhance the subscriber's mobile experience since service delivery avoids the link between the radio access network and the rest of the core network. Especially when services are deployed in base stations, transmitting volumes of data over a potentially narrow-band backhaul link can be reduced. Reducing these transmissions improve the round-trip delay for packet interactions and may increase the amount of bandwidth available for the mobile subscriber.

By avoiding backhaul communication for voluminous traffic, a mobile operator may be able to avoid expensive backhaul upgrades to keep pace with the capabilities of communication over the wireless channel. Examples of base station hosted services that reduce backhaul traffic are: locally hosted gaming applications with reduced latency and significantly improved response times or caching/CDN which reduce backhaul loading.

There are requirements that make service delivery through radio access network resources a challenge e.g. Lawful Intercept (LI), or charging. A Law Enforcement Agency (LEA) may demand a copy of all data transmitted to and received from a mobile subscriber for subscribers of interest. Only core network elements are deemed secure and which implies that no radio access network equipment can be used to provide the packets flows to the LEA. The implication for radio access network based services is that mechanisms need to be put in place to "copy" all data altered by services executing in the radio access network to the mobile packet core to enable the lawful intercept function.

Charging is a function that operates in the mobile packet core and counts the amount of data, time of day and use of additional services. This charging function enables the mobile operator to send a bill to the mobile operator's customer for services rendered. If services operate in the radio access network, the operator may not be able to provide accurate bills. Again, by copy of data from the radio access network to the mobile packet core as is done for the lawful intercept function existing charging infrastructures may operate without modification.

WO2013164474 discloses a radio access network that includes control means (a platform), wherein the control hosts a plurality of applications and includes verifying means for verifying the applications before allowing installation of the applications.

EP2315412 discloses a mobile telecommunications network that includes a core and a radio access network having radio means for wireless communication with mobile terminals registered with the network, wherein the radio access network includes control means operable to control the use of network resources by the mobile terminals. A multiplicity of applications are hosted on the control means. The control means may be provided at an access node site and/or a gateway site in the radio access network. An application context contains the protocol used to carry an application
It is an object of embodiments of the present invention to enable a SAVi or similar control means in the radio access network to exchange information with the network core.

While the embodiments are generally applicable in a Radio Access Network (RAN), the key target deployments include LTE and iHSPA base stations. The embodiments may also operate through UMTS radio network controllers (RNCs), GSM/GPRS base station controllers (BSCs) and other RAN functions.

### SUMMARY OF THE INVENTION

The present invention defines a mobile telecommunications network according to claim 1 and a method according to claim 6. Further embodiments are set forth in the dependent claims 2-5 and 7-10. The client function and the director function may be operable to provide the director function with the information.

The client function may be operable to provide the director function with the information relating to the applications hosted by the control means when the applications hosted by the control means change.

The information relating to the applications may be transmitted in a GTP-U communication session.

The information relating to the applications may be transmitted over an existing control channel between the client function and the director function established for one of the mobile terminals.

The embodiments to be described enable a SAVi platform or similar control means in the radio access network to exchange information with the network core. In the embodiments the information is exchanged via any available GTP-U session and does not need to be related to a specific mobile terminal user's session. Therefore, the communication can be used to exchange node specific information, e.g. details of applications installed on the SAVi Platform.

The present invention also provides a corresponding method of operating a mobile telecommunications network.

### BRIEF DESCRIPTION OF THE DRAWINGS

For a better understanding of the present invention embodiments will now be described by way of example, with reference to the accompanying drawings, in which:
Figure 1 shows SAVi Core Network Integration Architecture;
Figure 2 shows Uplink Packet - No Rule for this Flow;
Figure 3 shows Uplink Packet - SAVi Delivered Services;
Figure 4 shows Uplink traffic on SAVi Platform;
Figure 5 shows Downlink Packet - No Rule for this Flow;
Figure 6 shows Downlink traffic on SAVi Platform;
Figure 7 shows SCND (director) Discovery Request packet;
Figure 8 shows SCNC (client) Discovery Response packet;
Figure 9 shows SCNC (client) SAVi Discovery Request;
Figure 10 shows SCNC (client) SAVi Discovery Response;
Figure 11 shows the message flows in a SAVi Relationship Establishment Procedure;
Figure 12 shows SCND (director) SAVi Open Request message in the relationship establishment procedure of Figure 11;
Figure 13 shows SCNC (client) Open Response message in the relationship establishment procedure of Figure 11;
Figure 14 shows SCNC (client) Open Confirm message in the relationship establishment procedure of Figure 11;
Figure 15 shows SCNC (client) SAVi Update Request packet;
Figure 16 shows SCND (director) SAVi Update Response packet;
Figure 17 shows SCND (director) SAVi Copy Data;
Figure 18 shows SCNC Update Request packet (Services Data);
Figure 19 shows SCND (director) Update Response packet;
Figure 20 shows SCNC (client) Copy Data Packet;
Figure 21 shows Policy Update Midway through the session; and
Figure 22 shows the message flows in a procedure to update a record of the applications hosted on the SAVi Platform.

### DETAILED DESCRIPTION OF EMBODIMENTS OF THE INVENTION

### 1. Introduction

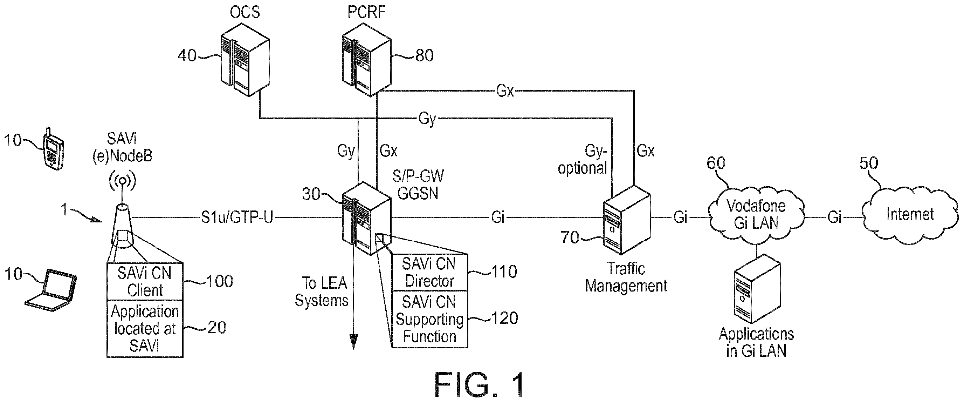

In an embodiment a control means is on Platform 1 (sometimes referred to as a SAVi platform) that provides services in a hosted SAVi processing environment. To offer core network support to a user/subscriber device 10 a SAVi Core Network integration architecture has been defined and is shown in Figure 1. Further a solution is proposed to exchange user traffic related signalling as part of the GPT-U (GPRS Tunnelling Protocol User plane) traffic. The arrangement provides message flows and methods to establish a communication and exchange signalling messages between SAVi functions located in the network core and SAVi functions located on the SAVi Platform in the RAN (Radio Access Network).

Figure 1 shows the system architecture of certain elements of the network. The Platform 1 is provided at the network edge and provides (e)NodeB/base station functions to the mobile terminal (user entity, UE) 10 by wireless communication.

The Platform 1 further includes an application (or service or function) 20 which may generate content for supply to the UE 10. In practice, a plurality of applications are likely to be hosted on the Platform 1.

The Platform 1 is connected via an S1 interface to the core network, which comprises a gateway 30 (e.g. GGSN/P-GW/SAE-GW). The gateway 30 facilitates the provision of core network functions, such as LI by an LEA, and charging, by online charging system 40.

The gateway 30 receives content from a primary content source via the Internet 50. The primary content is delivered from the primary content source via Gi LAN 60. This content is received by traffic management function 70 before delivery to the gateway 30.

A PCRF (Policy and Charging Rules Function) apparatus 80 is also provided, in communication with the gateway 30.

The arrangement uses two special functions where one function is located in the SAVi Platform 1 a so-called SAVi CN Client 100 (SCNC 100) - and the second function - a SAVi CN Director 110 (SCND 110) - is part of the GGSN/P-GW/SAE-GW 30 or close by the GGSN/P-GW/SAE-GW 30.

The SAVi director 110 communicates with SAVi CN Client 100 (located on the SAVi Platform 1) via a communication API to, e.g., send polices or collect data. As mentioned above the SAVi Director 110 is preferably located on the GGSN/PGW/SAE-GW 30 or close by to get user information/triggers in real time.

To support a secure and trusted communication between the SAVi CN Client 100 and the SAVi Director 110 the following functions are preferably supported by the SAVi Director 110:
- Securely authenticate with SAVi CN Client 100.
- Establishment of a secure communication between SAVi CN Client 100 and SAVi Director 110.
- SAVi Director 110 also is able to exchange information with the SAVi CN Client 100

This "director" module 110 is hosted in the mobile packet core (CN) and retrieves user identities and communicates those to the SCNC 100. The SCND 110 is responsible for managing functions and services in the SCNC 100. Thus, the SCND 110 is responsible for selecting subscribers that need to be subjected to SAVi local services, the SCND 110 manages user access services and user capabilities through SCNC 100, and SCND 110 informs the appropriate SCNCs 100 how to route traffic in the SAVi RAN environment.

The SAVi CN Client 100 is located on the SAVi server Platform 1 and may support the following functions:
- Authenticate with the SAVi Director 110.
- Inform the SAVi Director 110 about new user sessions.
- Informs the SAVi Director 110 about content and application used by a specific user.
- Steers the content flow based on the SAVi Director 110 settings pushed to the SAVi CN client 100 per user and per application.

This "client" 100 in the SAVi Platform 1 (located in the radio access network) communicates with the core network (CN) and manages subscriber identities, policies and services to be applied on selected subscribers.

The gateway 30 further includes a SAVi core network supporting function (SCNSF) 120. The SCNSF 120 is a function located in the mobile packet core (CN) providing additional support to operate SAVi. For example, when content is modified by the SCNC 100, the SCNSF 120 function may provide supporting functionality for charging, lawful intercept and other mandatory core functions, and/or SCNSF 120 may support functionality to aid in mobility management.

The SAVi core integration architecture described above functions correctly in the environment where not all gateways are SAVi capable and not all base stations have SAVi capabilities. Further it must be considered that the S-GW and P-GW are not necessarily collocated as is shown (at gateway 30) for simplicity reasons in Figure 1.

In the embodiment all uplink and downlink user related packets are routed through SCNC 100 on the SAVi Platform 1 and through SCND 110 in the core (although this is not essential).

The proposed integration for user specific traffic and signalling provides basic core functions to SAVi Platform 1 for the user, e.g.:
- Lawful Interception
- Charging
- Policy functions

### 2. General Core network Requirements

The following is a basic list of preferred requirements from the core network point of view. By meeting these requirements service parity is delivered with and without SAVi and that there is no impact on available Gi and core services and a limited impact on the core nodes in case of introduction of SAVi.
- General core network related functions, service are not affected, such as IP Address allocation, GTP (GPRS Tunnelling Protocol)/PDP handling, Core pooling, Charging, Policy enforcement, HTTP header enrichment, or Traffic Management.
- Differentiated Services: MPC (Mobile Packet Core) remains the place that manages subscriber policies and services.
- Transparent User Behaviour: The user behaviour is consistent whether the user is connected to a base station with or without SAVi, for those services that remain available from the core network outside of SAVi-enabled base-stations.
- Security: Mutual authentication of new network elements. Content stored on a SAVi base station is safe and privacy guaranteed.
- Lawful Interception (LI) works without any modification at the LI systems and SAVi locally generated content is captured by LI systems as if content originates from the core network.

### 3. Traffic flows through SAVi

SAVi manages GTP-based traffic originating or terminating in the RAN, and terminating or originating in the mobile packet core. Examples of mobile packet core nodes are a GPRS gateway support node (GGSN) or PDN gateway (P-GW), designated 30 in Figure 1. An example of a RAN node is a LTE or iHSPA base station, designated 1 in Figure 1. SAVi (here SCNC 100 100) can also be applied in other RAN nodes such as RNCs.

Note that a combined S/P-GW node must not be assumed. The S-GW and P-GW could be also separated. The solution is applicable to both ways of deploying SAE-GW's.

SCNC 100 is a user-plane function that operates in the RAN and manages core related functions for the user traffic only. In the embodiment all user traffic between mobile node 1 and mobile packet core is routed via the SCNC 100. This is because the RAN nodes themselves do not have sufficient knowledge to identify users.

The SAVi Platform 1 is shown in more detail in Figures 1, 4 and 6. The Platform 1 includes (e)NodeB module 200 operable to perform radio functions corresponding to those of a conventional (e)NodeB, (LTE or 3G base station) a SAVi functions module 210 operable to route packets within the Platform 1, the SCNC 100 and a plurality of applications (or service or functions) 20A, 20B. The applications 20A, 20B (and 20) are typically user applications that provide services to a user of a mobile device 10.

### 3.1 Uplink Traffic

The decision if packets will get routed to specific application depends on, for example, the user profile, the service capabilities, or the user status.

The SCNC 100 is the interface to all applications 20A, 20B hosted on the Platform 1, as any error introduced by an application in constructing the GTP header could cause serious problems, e.g. if the Tunnel End point ID (TEID) gets changed. Therefore the applications use a Transport-Protocol Data Unit T-PDU (user packet) tagged with a bearer ID, e.g. the 4-tuple + U/D (uplink/downlink) flag. The SCNC 100 constructs the GTP-U header in this case.

The SCNC 100 relies on the SAVi Platform 1 environment routing capabilities to route packets between applications 20A/20B and the SCNC 100.

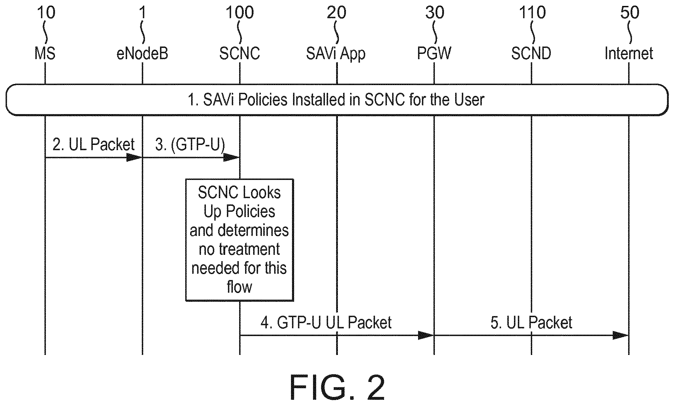

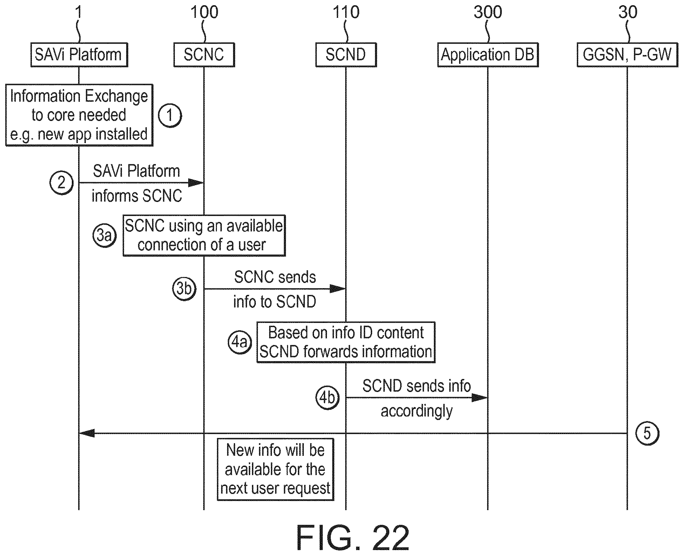

Figure 2 shows the flow of messages when no processing by an application 20, 20A, 20B is required. The following steps are shown in Figure 22.
(1) The SAVi Relationship has been established and therefore the SCNC 100 knows about the policies to be associated with this bearer. Any subsequent traffic arriving at SCNC 100 on this bearer will be subjected to these policies.
(2), (3) User sends a packet in uplink direction. This message is encapsulated inside GTP-U by eNodeB and routed into SCNC 100.
(4) SCNC 100 looks up policies and determines no treatment needed for this traffic (identified by 5-tuple) and hence releases the packet in uplink direction to P-GW.
(5) P-GW releases the packet into external PDN after performing LI/Billing functions as needed.

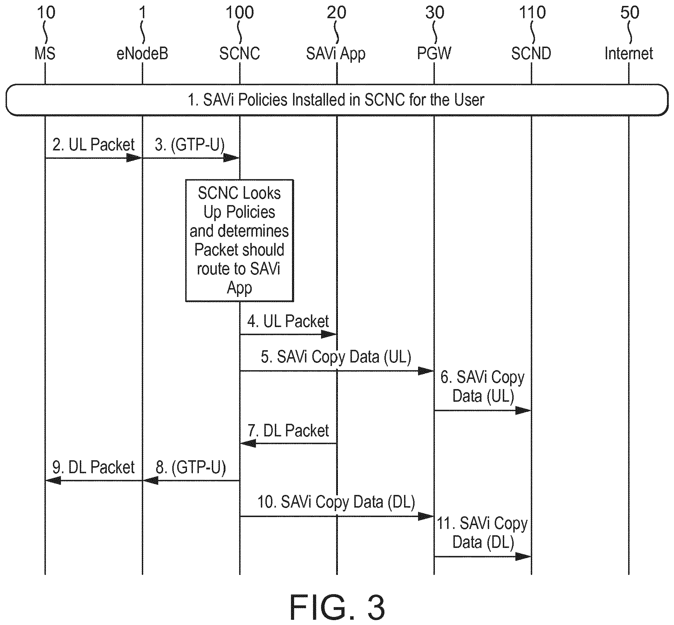

Figure 3 shows the flow of messages when processing by an application 20, 20A, 20B is required. The following steps are shown in Figure 24.
(1) The SAVi Relationship has been established and therefore the SCNC 100 knows about the policies to be associated with this bearer. Any subsequent traffic arriving at SCNC 100 on this bearer will be subjected to these policies.
(2), (3) User sends a packet in uplink direction. This message is encapsulated inside GTP-U by eNodeB and routed into SCNC 100.
(4) SCNC 100 looks up policies and determines that this packet needs to be processed by SAVi services hosted at the eNodeB (identified by 5-tuple). The packet is hence routed into the SAVi application (SCNC 100 may strip off GTP-U header before routing the traffic into SAVi App).
(5) At this point SCNC 100 needs to send a copy of uplink user request packets to P-GW for Lawful Intercept and Charging purpose. It encapsulates this packet into SAVi a Copy Packet format and sends the packet in the uplink direction.
(6) P-GW routes these packets into SCND 110 so that these packets can be decapsulated for use in LI and charging functions.
(7), (8), (9) If SAVi App can service the request locally (e.g. caching application), it sends a downlink packet. The packet is sent in the downlink direction to the UE (eNodeB may need to encapsulate the packet into GTP-U if application itself does not do so).
(10) At this point SCNC 100 may need to send a copy of downlink packets send to the user to P-GW for Lawful Intercept and Charging purpose (see section 3.5). It encapsulates this packet into SAVi Copy Packet format and sent the packet in the uplink direction.
(11) P-GW routes these packets into SCND 110 so that these packets can be decapsulated for use in LI and charging functions.

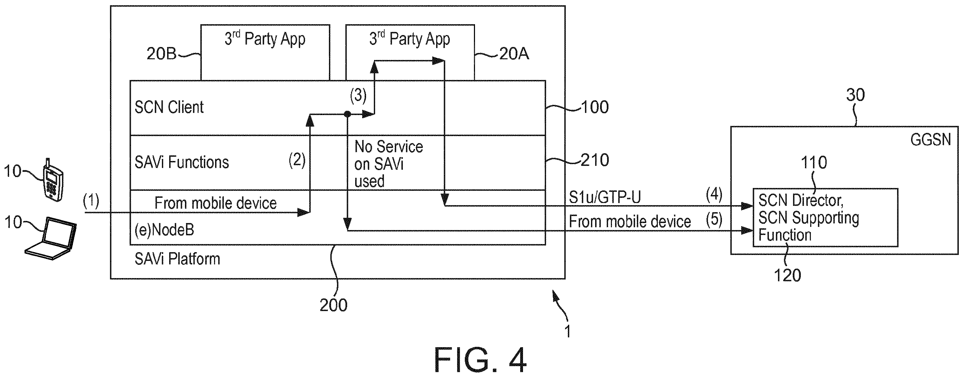

Figure 4 shows uplink traffic on SAVi Platform 1. In the Uplink direction, the flow of user traffic is as follows:
(1) the packet transmitted by UE 10 is encapsulated into GTP-U by the eNodeB 200,
(2) eNodeB 200 routes the packet into SCNC 100,
(3) If SCNC 100 determines that the packet needs further processing by, e.g., network or third Party Apps 20A/20B, it is rerouted via the SAVi Platform 1 into those Apps and
(4) After processing, the Apps 20A/20B (in this example) then forward the traffic back, via the SCNC 100, to encapsulate in GTP-U in the eNodeB function 200, which then forwards it towards the core (gateway 30). Other traffic routings are possible.

### 3.2 Downlink Traffic

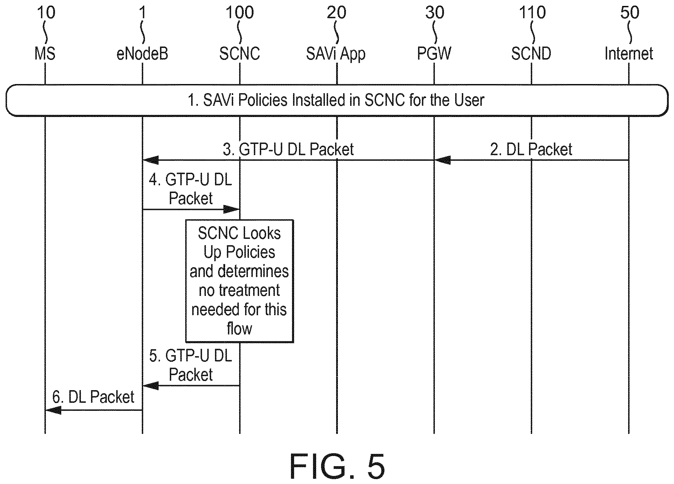

Figure 5 shows the flow of messages when no processing by an application 20, 20A, 20B is required. The following steps are shown in Figure 23.
(1) The SAVi Relationship has been established and therefore the SCNC 100 knows about the policies to be associated with this bearer. Any subsequent traffic arriving at SCNC 100 on this bearer will be subjected to these policies.
(2), (3) P-GW receives downlink packet to be delivered to the user. It encapsulates the packet into GTP-U and sends it in the downlink direction.
(4) The packet arrives at eNodeB. The eNodeB routes the packet into SCNC 100.
(5) SCNC 100 Looks up into the policies installed for the user (bearer) and determines that no treatment is needed for this flow (identified by 5-tuple), and hence sends the packet in the downlink direction.
(6) eNodeB sends the packet to the user.

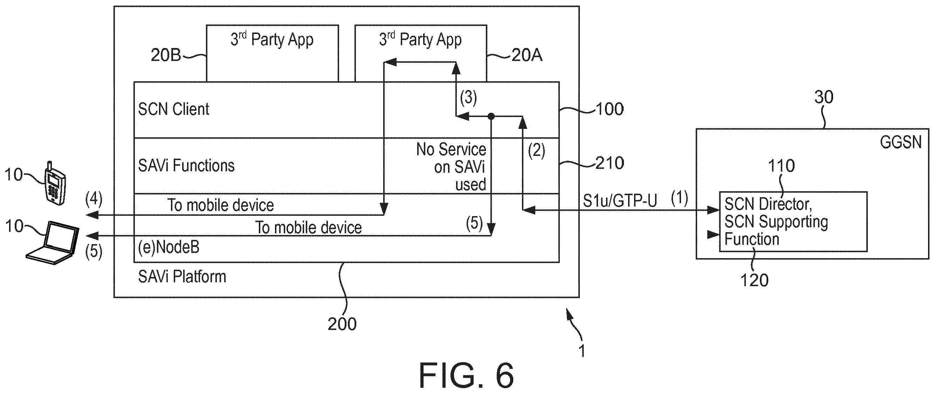

Figure 6 shows downlink traffic on SAVi Platform 1. In the downlink direction, the flow of user traffic is:
(1) the GTP-U packet is transmitted from the core (gateway 30) to eNodeB 200,
(2) eNodeB 200 routes the packet into SCNC 100,
(3) If SCNC 100 determines that the packet needs further processing by, for example, network or third party Apps 20A/20B, it is rerouted into those Apps and
(4) after processing, the Apps forward the traffic via the SCNC 100 to encapsulate in GTP-U in eNodeB 200, which then transmits it towards the UE 10.
(5) In case no Apps are used (or required to process the data packets), the SCNC 100 forwards the traffic back to eNodeB 200 which then forwards it to the UE 10.

The SCNC 100 maintains a service table comprising a list of subscribers by way of their uplink and downlink GTP tunnel identities (e.g. TEIDs+TLAs, Transport Layer Addresses) and the appropriate actions (policies) that are to be taken on those packets. This table is managed by the mobile packet core's SCND 110 pushing policies to the SCNC 100 and an open interface exists in the SCND 110 to populate this table with session routing information.

### 3.3 Service Chaining

In general the SCNC 100 is capable of applying more than a single application 20A/20B to a given user flow passed on policies. However it is not expected usually to have many applications applied to a given user flow. Even so a user may have in total several active flows, each through one or more applications.

In the case of Policy based chaining the SCNC 100 has to get back the data flow from one application 20A and routes it to the next application 20B based on the policies for that GTP-U.

Downlink service chaining may be based on a predefined service chain. In this case the application and the SAVi Platform 1 need to be capable of handling the service chain in a predetermined way (e.g. not according to a changeable policy).

### 3.4. Control Traffic

SAVi system carries its user related control traffic over existing GTP-U sessions to establish end-to-end connectivity between SCNC 100 and SCND 110. This user related control traffic is encapsulated in GTP-U sessions such that each of SCNC 100 and SCND 110 recognize this traffic as non-user data traffic. The control messages are SAVi specific and have no meaning outside the SAVi realm. The user related control channel between SCNC 100 and SCND 110 is termed the "SAVi core network protocol".

The SCND 110 provides the SCNC 100 with the user identity associated with that GTP-U session via the control channel.

### 4 SAVi Core Network Protocol

A SAVi core network protocol (see section 3.4) is responsible for establishing an in-band control channel between SCNC 100 and SCND 110 that enables the SCNC 100 to apply, for example, per-user, per-traffic-type or service-type policies to user-traffic. The policies are applied in the platform 1 to route user traffic into appropriate applications/inline-services 20A/20B hosted on the SAVi enabled (e)NodeB platform 1, responsible for providing applications as proposed. This section provides details of procedures and messages exchanged between SCNC 100 and SCND 110, and high-level formats of individual messages. SAVi Core Network Protocol is responsible for providing following functionalities:
a) A Discovery Mechanism, so as to establish SCNC 100 - SCND 110 per bearer relationship between SAVi capable (e)NodeB and SAVi capable core-network nodes.
b) A method for SCND 110 to discover SAVi Platform 1 capabilities (e.g. which services or applications are available at SAVi Platform) by requesting this information via the SCNC 100.
c) A method for SCNC 100 to update SAVi Platform 1 capabilities when changes and updates happen.
   Note for b) and c): The update of applications and services 20A/20B on the SAVi Platform 1 is not performed by the SAVi core network protocol. Nevertheless the SCNC 100 needs to be informed of any changes to inform the SCND 110 accordingly. This is a function between the SCNC 100 and the SAVi Platform 1.
d) A method for SCNC 100 to obtain per-user services/applications policies from SCND 110.
e) A method for SCND 110 to update policies to SCNC 100 for a given user or service/application at any time when required.
f) A method for SCND 110 to request the policies for a specific user at any time.
g) A method for SCNC 100 to send copied user traffic (content created or modified on SAVi Platform 1) back to SCND 110 and ultimately destined to SCNSF 120, so that it can be used for, for example, Charging or Lawful Intercept functions. Corresponding functionality on SCND 110 and SCNSF 120 is provided to extract original packets and feed them into function or services, for example, the LI system expects the same content as that sent to the customer. Therefore the SCNC 100 needs to copy all downlink user content originated or modified on the SAVi Platform 1 by specific applications/services 20A/20B. The SCND 110 needs to have the information that this content is copied to decide on the next actions.

The present embodiments are not directed to providing all of the above functionalities.

In the following subsections different methods of providing an in-band control channel are discussed which satisfy the criteria mentioned above.

SAVi In-band Control Channel may be implemented based on one of three options:
1. Use Echo Request and Response messages as means to implement SCNC 100-SCND 110 discovery and data transfer.
2. Use Uplink Probing where specially formatted GTP-U messages are used to implement discovery mechanism and transfer policy and data. In this case the Discovery is initiated by SCNC 100.
3. Use Downlink Probing where specially formatted GTP-U messages are used to implement discovery mechanism and transfer policy and data. In this case the Discovery is initiated by SCND 110.

The subsequent sections describe Discovery mechanism and data transfer for the in-band control channel for each of the three methods.

### 4.1 SCNC/SCND Discovery Mechanism

To establish a relationship between SCNC 100 and SCND 110 for a user bearer before any SAVi policies are applied, SCNC 100 and SNCD 110 exchange a simple protocol to establish the control channel in-band over a GTP-U session.

The following high-level information is exchanged between the various functional components in SAVi during discovery:
- SCNC 100 determines if the GGSN/P-GW 30 it is communicating with is SAVi compliant meaning that SCND 110 and SCNSF 120 are present and available for the given bearer.
- SCNC 100 determines if all required functions or services are available via the connected GGSN, P-GW 30 and it needs to get updated on any changes in the availability of these functions.
   Note: Users at a specific SAVi Platform 1 may get served by different core nodes.
- SCND 110 needs to know and needs to get updated on any changes of the capabilities of the SAVi Platform, applications, functions and services 20, 20A, 20B located in the RAN.

The following preferences are considered while determining the method and sequence of messages exchanged:
- Discovery method is in-band carried over GTP-U.
- The SCNC 100, SCND 110, relationship is dynamically established per bearer.
- In case of service updates or the introduction of new service such information is dynamically distributed.

In cases where SAVi relationship needs to be extended to Outbound Roamers based on network operator agreements, it is proposed to enable the same by local configuration on the home GGSN/P-GW 30. The configuration may be defined per vPLMN. Similarly, for the case of Inbound Roamers, it is the responsibility of the Roamer's home GGSN/P-GW to establish SAVi relationship with visited PLMN's SAVi (e)NodeB if a commercial agreement is available.

The introduction of support for EU Local Breakout (LBO) should not have any impact on SCND 110 and SCNC 100 functions. Indeed a visited network could offer SAVi services to a visitor as part of an LBO agreement.

### 4.1.1. Preferences for SCNC and SCND Discovery

1. The procedure is clearly identifiable as a discovery mechanism
2. Bearers for APNs that do not require SAVi processing must be unaffected by any SAVi procedures, e.g. no G-PDUs (Transport Protocol Data Unit, T-PDU, plus a GTP header) solely used for SAVi may be sent over them at any time. (LI and charging issues)
3. In the roamed-out case a non-SAVi supporting V-PLMN must not receive any G-PDUs solely used for SAVi from a SAVi supporting H-PLMN (LI and charging issues)
4. In the roamed-in case a SAVi-supporting V-PLMN must not send any G-PDUs solely used for SAVi to a non-SAVi supporting H-PLMN (LI and charging issues)
5. The procedure is non-disruptive for combinations of eNodeB and P-GW where one has no SAVi capability.
6. UE 10 must itself discard downlink SAVi packets if an SCNC is not present in the eNB.
7. The SAVi association set up procedure must be resistant to the UE spoofing uplink SAVi packets
8. The SAVi association set up procedure must be resistant to the external network (e.g. internet 50, PDN) spoofing SAVi packets
9. The procedure allows SCNC 100 and SCND 110 to mutually authenticate if this is required.
10. To minimise resource utilisation in the P-GW 30, the SCND 110 should not need to maintain the state of each SAVi enabled bearer. The SCNC 100 should maintain such state.
11. The procedure works both with a combined S/P-GW 30 and with standalone S-GW and P-GW. For preference, a standalone S-GW should not require modification to work with SAVi.
12. The discovery procedure works for the following scenarios:
   (In either case the previous cell may or may not have been SAVI-capable.)
   a. UE 10 enters a cell on a SAVi-capable eNodeB 1 and requests a new bearer
   b. UE 10 enters a cell on a SAVi-capable eNodeB 1 with an existing bearer

### 4.1.2. Discovery Initiation

Whenever SCNC 100 receives uplink or downlink traffic, it checks whether it has a SCNC 100 to SCND 110 relationship established for the bearer. If the relationship does not exist, the SCNC 100 bridges the traffic back to (e)NodeB, from where it is sent to the GW 30 or the UE 10 in the conventional manner. It does not wait for the relationship to be established. In case of bridging, no SAVi related services are offered.

This approach might result in some SAVi Users not being subjected to SAVi processing at the first time of using the service; however, this is expected to happen only when the bearer has just been created and uplink or downlink traffic arrives at SCNC 100 before the SCNC 100-SCND 110 relationship is established, or if no SAVi processing is expected for the bearer as per policies received The possible methods for mutual SCNC 100 - SCND 110 discovery are described below.

### 4.1.3. Downlink Discovery using GTP-U Echo Messages

When a new bearer is established GGSN/P-GW 30 informs SCND 110 about the bearer creation. This triggers SCND 110 to immediately initiate a GTP-U Echo Request message with Private Extensions (see more details in section 4.1.3.1) destined to SCNC 100, requesting following information from the SCNC 100:
- SAVI Compliancy Statement (Yes/No)
- Version of SAVi protocol
(e)NodeB 1, upon receipt of this GTP-U Echo Request Message with private extensions, routes it into the SCNC 100. The SCNC 100, upon inspection of this packet, learns that SAVi services are permitted for the given bearer. It records this information internally so that SAVi Services can be applied to subsequent packets arriving on this bearer. The SCNC 100 then replies to the SCND 110 with a GTP-U Echo Response message providing the information as listed above.

An alternative Uplink Discovery version of this mechanism is for the SCNC 100 to initiate the handshake by sending the Echo Request message containing a list of applications etc. and the SCND 110 replying with a GTP-U Echo Response containing the SAVi services that are permitted for the bearer.

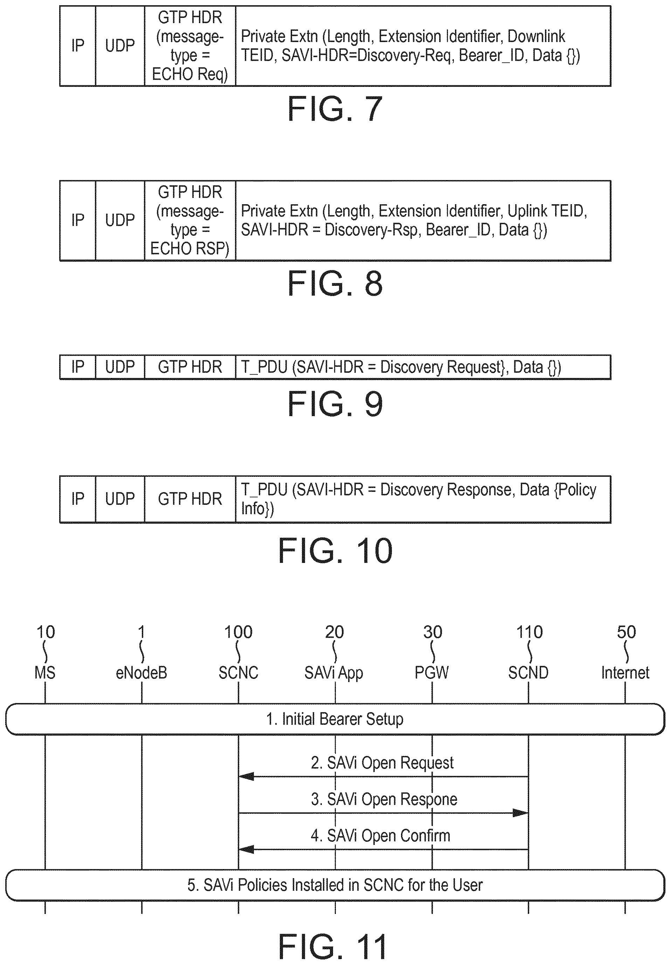

The format of the SCND 110 Discovery Request packet is shown in Figure 7.

The Discovery Request message contains the SAVi policy information for the bearer in its Data field.

Since SCNC 100 can detect that this is a SAVi Control GTP-U Echo message, it never releases the packet in downlink direction to (e)NodeB 1, and discards it after processing. The Echo response is generated by SCNC 100 itself providing the information as requested above, carried over Private Extensions.

SCNC 100 responds to the request with its SAVi compliance statement, SAVi protocol version, uplink TIED and a list of available applications 20A/20B.

The format of the SCNC Discovery Response packet is shown in Figure 8.

Note that the SCNC 100 only responds to GTP-U Echo Messages carrying SAVi information. Any other GTP-U Echo messages will be released in downlink direction and (e)NodeB 1 will respond to these messages as part of usual path management procedure.

SCND 110 implements normal ECHO retransmission strategy before deciding that there are no SAVi services possible for the bearer. Once SCNC 100 to SCND 110 relationship is established, there is only the need to perform GTP-U ECHO (with Discovery messages) when the service catalogue on SAVi Platform 1 or SCND 110 changes or there is a change in set of SAVi applications 20A/20B allowed for the bearer. Normal ECHO mechanisms can continue irrespective of these transactions though.

When new services or applications are made available at the SAVi Platform 1 (or when changes are made to services or applications already available at the SAVi Platform 1), the same messages (Echo Request and Echo Response) are used to update SCND 110, so that SCND 110 can start providing policies related to the new (or changed) functionality for users.

When the set of SAVi services allowed for the bearer changes on the GGSN/PGW 30 the same messages (Echo Request and Echo Response) are used to update SCNC 100, so that it can enforce the new policy set.

### 4.1.3.1. Private Extensions

| Octets | Contents |
|---|---|
| 1 | Type = 255 (Decimal) |
| 2-3 | Length |
| 4-5 | Extension Identifier |
| 6-m | Extension Value |

The format of the "Private Extension" IE is shown above. The Extension Identifier is a value defined in the IANA list of SMI Private Enterprise Codes. This list may, e.g., be found at http://www.iana.org/assignments/enterprise-numbers/enterprise-numbers (which supersedes the one in RFC 1700 referred to in 3GPP TS 29.281).

A new number can be assigned on request to IANA or a number already assigned to the MNO could be used.

The Extension Value contains the SAVi information described above. Note that Private Extensions can only be carried in GTP-U signalling messages such as Echo Request and Response.

### 4.1.4. Uplink Discovery using G-PDUs

Uplink Discovery mechanism is initiated by SCNC 100 when a data packet (G-PDU) arrives (either downlink or uplink) and SCNC 100 does not have a SAVi relationship with a SCND 110 for this bearer. While the discovery procedure takes place between SCNC 100 and SCND 110 user packets are bridged - i.e. no SAVi services are applied until SAVi policy is sent from SCND 110. While the relationship does not exist, the SCNC 100 bridges the traffic back to (e)NodeB, from where it is sent to the GW 30 or the UE 10 in the conventional manner. In case of bridging, no SAVi related services are offered. In some cases this may cause SAVi services not be available for the initial packets until the Discovery procedure is completed but this method prevents SAVi services to be applied to bearers which are not authorized to receive them.

SCNC 100 sends a special GTP-U data message (G-PDU) to the SCND 110. The G-PDU is special because the T-PDU contained in it is addressed to the SCND 110 and is not intended for delivery to the External network (e.g. Internet 60, PDN).

The format of the packet is shown on in Figure 9.

The Discovery Mechanism is achieved by use of T_PDUs with IP addresses that could never be found in a normal GPRS bearer.

For uplink the UE 10 address is used as a source IP address to prevent the packet being dropped by the anti-source spoofing feature of the GGSN 30. Destination IP address is 0.0.0.0 which is easily detected by a SAVi GGSN/P-GW 30 and will be dropped by a non-SAVi GGSN/P-GW. Any suitable UDP port number for source is used and for destination could be Port 3386 (actually assigned to the now obsolete GTP - Version 0).

Upon receiving the Discovery Request packet, the GGSN/P-GW 30 routes the packet into SCND 110 based on presence of this unique (0.0.0.0) IP Address. SCND 110 in turn identifies the bearer and looks up its SAVi information. If the bearer is allowed to use SAVi services then SNCD 110 formulates a Response packet and includes appropriate policy in the Data field. If SAVI services are not allowed for the bearer, SCND 110 returns Response with Data field Null.

Figure 10 shows the SCNC 100 SAVi Discovery Response format.

The Discovery Response packet is sent as regular GTP-U packet with destination IP address = UE IP address and source IP address = 0.0.0.0. This will be intercepted by the SCNC 100 and not forwarded to the UE.

### 4.1.5. Downlink Discovery using G-PDUs

This downlink discovery procedure is initiated by the SCND 110, in order to avoid the problems that arise from an uplink discovery procedure initiated from the SCNC 100. In particular it should be noted that an uplink procedure initiated by the SCNC 100 might not satisfy certain of the compatibility requirements (see list in section 4.1.1) since the SCNC 100 is not APN-aware and does not know the identity of the PLMN in which the P-GW 30 is located and therefore its SAVi capabilities.

The SCND 110 does not maintain SAVi state for each bearer. However, it does perform a stateful 3-way handshake procedure in order to establish a relationship between the SCND 110 and SCNC 100 for each bearer. The SCNC 100 does maintain the SAVI state for each bearer.

The SCNC-SCND relationship is achieved by a 3-way handshake initiated by the SCND 110, hence the term: "downlink discovery". It is triggered by any of the following events:
- For a newly-created bearer it takes place immediately after the P-GW 30 has completed the normal bearer creation procedure.
- For a RAT type change from a non-SAVI capable to a SAVI capable RAT type it takes place following the bearer modification procedure.
- For a UE entering a cell on a SAVi-capable eNodeB with an existing bearer, the trigger mechanism described in the following section is used.

The SCND 110 starts the procedure by performing checks that:
a) SAVI is enabled for this APN
b) Subscriber 10 has SAVi service
c) Subscriber 10 is not roaming or a SAVi Roaming agreement exists (Roaming is indicated by the S-GW/SGSN IP address not being in the local EPC/network core.)
d) RAT type is SAVi capable in the serving PLMN. The P-GW 30 knows the RAT type through normal GTP-C messages. The support for SAVi on this RAT type would be part of the SAVi Roaming Agreement - see c. above.

With this mode of probing, the initiation of the 3-way handshake could be selectively performed only towards a SAVi capable eNodeB 1. This would require the SCND 110 to a) identify the eNodeB that the UE is currently using, and b) consult a database (e.g. PCRF 80) to determine if this eNodeB 1 is SAVi-supporting. Based on this information, the SCND 110 could decide whether to initiate these messages towards that eNodeB 10 or not. This procedure would require usage of the ULI (User Location Information) reporting feature on core nodes. The ULI Information Element is carried in bearer creation and bearer update messages and is defined in 3GPP TS 29.060, Section 7.7.51.

The relationship discovery procedure is shown in Figure 11.

After the initial bearer setup (step 1, Figure 11) In the event that the eNodeB 1 is determined to be SAVi-supporting or its state of SAVi support is unknown, the SCND 110 then sends a SAVi Open Request in the downlink tunnel (step 2, Figure 11).

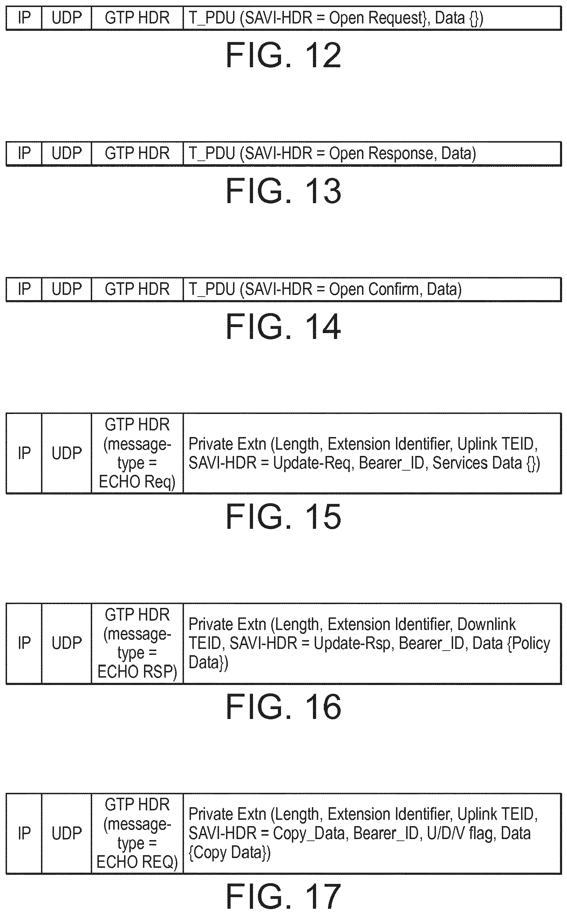

Figure 12 shows a SCND 110 SAVi Open Request
The Data field contains:
PLMN ID (core)
SCND ID
SAVi relationship ID (generated by and unique to this SCND)
Authentication challenge 1 if required
The TPDU has Source=0.0.0.0, Destination=UE IPaddr, UDP S=tbd,
D=3386

If no response is received this message is repeated up to a predetermined number of times at predetermined time intervals before the eNB 1 is considered to be non-SAVi enabled)

The SCNC 100 receives the SAVi Open Request in the downlink tunnel and it sends a SAVi Open Response on the corresponding uplink tunnel (step 3, Figure 11). (These are linked in the eNB 1 by the Bearer ID.) The SCNC 100 may reject the request if it is unable to provide SAVi service.

Figure 13 shows a SCNC 100 Open Response.

The Data field contains:
PLMN-ID (RAN)
SCND ID
Result code (accept, reject, ...)
SAVi relationship ID (This is as received from SCND unless the SAVi relationship already exists in which case the existing SAVi relationship ID is used.)
SCNC ID
Authentication response 1 if required
Authentication challenge 2 if required
The T-PDU has Source=UE IPaddr, Destination=0.0.0.0, UDP S=3386, D=as sent by SCND
(Source=UE_IPaddr ensures that the packet is not blocked by the P-GW's UE source address anti-spoofing filter.)

To complete the handshake the SCND 110 sends an Open confirm message to the SCNC 100 (step 4, Figure 11).

Figure 14 shows a SCNC 100 Open Confirm Message.

The Data field contains:
SCND ID
SAVi relationship ID (received from SCNC)
SCNC ID
Result code (accept, reject, ...)
Authentication response 2 if required
Subscriber's SAVi profile (rules)
Subscriber identity information as required

The TPDU has Source=0.0.0.0, Destination=UE IPaddr, UDP S=tbd, D=3386

The SCNC 100 now has a SAVi profile for this bearer and SAVi applications 20A,20B can be run in the eNB 1 (step 5, Figure 11).

The steps of Figure 11 can be summarised as follows:
(1) Initial Bearer Setup happens between UE 10 and P-GW 30 which acts as a trigger for the P-GW 30 to start the SAVi Relationship Establishment Procedure
   "Modify Bearer" and "Uplink Extension Header Probe" are other possible triggers to start this procedure.
(2) SCND 110 in P-GW 30 issues SAVi Open Request (as a G-PDU).
(3) The eNodeB 10, upon receiving this packet, routes it into SCNC 100. SCNC 100 responds back with SAVi Open Response (as a G-PDU).
(4) SCND 110 responds back with SAVi Open Confirm message (as a G-PDU). This message carries policies & rules to be applied to user traffic received at SCNC 100.
(5) At this point, SCNC 100 knows about the policies to be associated with a given bearer. Any subsequent traffic arriving at SCNC 100 on this bearer will be subjected to these policies.

### 4.1.6. Trigger Mechanism using G-PDU Extension Header

A weakness of the Uplink Discovery procedure using G-PDUs is that the SCNC 100 sends G-PDUs that are solely used for SAVi. This can potentially cause LI and charging problems for non-SAVi APNs and in the roamed-in case. Whilst the "Downlink Discovery procedure using G-PDUs" overcomes this problem it creates a new problem in that a SAVi relationship can only be established when a bearer is created or modified. When a UE enters a cell on a SAVi-capable eNodeB with an existing bearer no SAVi relationship is established.

The procedure described in this section triggers the SCND-initiated, 3-way handshake described in the Downlink Discovery procedure using G-PDUs (section 4.1.5) but rather than being triggered solely by a bearer creation or modification, it is triggered in addition by an Uplink Discovery "probe" from the SCNC 100. This eliminates the single non-compliant aspect of the Downlink Discovery procedure using G-PDUs, i.e. how to alert the SCND 110 in the case of the arrival of a UE 10 with an existing PDN context in a SAVi-supporting eNodeB 1. The "probe" is initiated by the SCNC 100 when the first uplink G-PDU is received from the UE 10 after the bearer has been created in the eNodeB 1. It is carried in a header extension field of this first one (and possibility a small number of subsequent) uplink G-PDU(s). Unlike the "Uplink Discovery procedure using G-PDUs" this procedure satisfies the requirement of not sending G-PDUs that are solely used for SAVi before it is known that both SCNC 100 and SCND 110 are present in the path. However it does rely on an uplink G-PDU arriving at the SCNC 100 from the UE 10 within a reasonable time after the bearer has been created in the eNodeB 1. It should not require any modification to the S-GW in a standalone configuration.

This probing procedure uses the header of the first one or more uplink G-PDUs (GTP-U messages carrying user data) to indicate that the eNodeB 10 is SAVi capable. It makes use of the GTP-U Extension Header feature.

### 4.2. SCNC - SCND Relationship Deletion Procedure

The SCNC 100 - SCND 110 relationship for a bearer can be forcibly deleted whilst a UE 10 is connected to a SAVi-capable eNodeB 1 by either party initiating the Relationship Deletion Procedure. In both cases this results in SAVi processing ceasing for that bearer. This may be immediate or the application(s) 20A/20B may be allowed to terminate gracefully. The Close Request and Response messages use the same format as the Update Request and Update Response.

In the SCND 110-initiated deletion, the Data field in the Close Request indicates how the applications 20A/20B are to be terminated either immediately or allowed to proceed to completion. The Close Response confirms that the Close Request has been received and complied with, not that the application terminations are necessarily complete. An unexpected Close Response is ignored.

In the SCNC 100-initiated relationship deletion, the Close Request indicates that an event has occurred in the SAVi eNodeB 1 that requires the relationship to be deleted. The applications 20A/20B will no longer be processing traffic for this bearer. The Close Response confirms receipt by the SCND 110. An unexpected Close Response is ignored.

When a bearer is deleted by the user or network, or the UE 10 leaves a SAVi-capable eNodeB 1 the SCNC 100 deletes the SAVi Relationship. An activity timer may also be used to delete the SAVi relationship in the SCNC 100. It is not necessary for the SCNC 100 to notify the SCND 110 since the SCND 110 is stateless. However such information might be useful for diagnostic purposes so optionally the SCNC 100 may send a Close Request to the SCND 110 if the uplink tunnel is still available.

### 4.3. SCNC - SCND Information Transfer Procedure

This section describes the procedure for SAVi information transfer for a specific bearer between the SCNC 100 and SCND 110 once a relationship has been established for this bearer.

The information is sent between SCND 110 and SCNC 100 using the same message format as is used for the Discovery messages described in section 4.1.

### 4.3.1. SAVi Information Transfer using Echo Messages

This section describes SAVI policy and copied data transfer for the case where Echo messages are used to implement an in-band control channel between SCNC 100 and SCND 110. A pair of request and response messages is used and the transaction can by initiated by either the SCNC 100 (as shown below) or the SCND 110 depending on which end has new information to report to the other.

If SAVi applications, functions or services 20, 20A, 20B are changed on the SAVi Platform 1 then the SCNC 100 sends Update-Request message as in Figure 15 (see also section 5). The message contains details of the changed applications, functions or services. In response to the Update_Request message, SCND 110 saves the SAVi policies and sends Update_Response message as in Figure 16.

A change in SAVi applications, functions or services 20, 20A, 20B would be triggered by the addition or removal of the SAVi services.

If the SAVi services authorised for the bearer change then the SCND 110 initiates the procedure described above. The formats of the messages are the same as shown above except the Request carries the Policy Data. The Data field in the Response may be empty.

If a SAVi application 20A/20B is generating downlink data locally or there is a requirement for verification purposes to compare the uplink data from the UE 10 with that sent uplink by the application 20A/20B to the GGSN 30 then a copy of this data is transferred from the SCNC 100 to the SCNSF 120 (SAVi Core Network Supporting Function) via the SCND 110. The format of the message in this case is shown in Figure 17. The U/D/V flag indicates if the data is a copy of an uplink, downlink or verification packet. In this case the SCND 110 receives the data and passes it to the appropriate supporting function. This message may be acknowledged by the SCND 110 using a corresponding Echo Response message although the SCNC 100 need take no action on receipt. Instead, a TCP type of ACK mechanism, whereby not every packet is ack-ed individually could be used to reduce the signalling load if an acknowledgement is required. Alternatively, the message could be left unacknowledged and the light-weight SAVi Relay Function in the S-GW (see section 4.1.3) would need to ensure that the missing Echo Response message did not trigger the standard error handling procedure.

### 4.3.2. SAVi Information Transfer using G-PDUs

This section describes SAVI policy and copied data transfer for the case where GTP Data (G-PDU) messages are used to implement an in-band control channel between SCNC 100 and SCND 110. It can be used following either the Uplink or Downlink Discovery using G-PDUs.

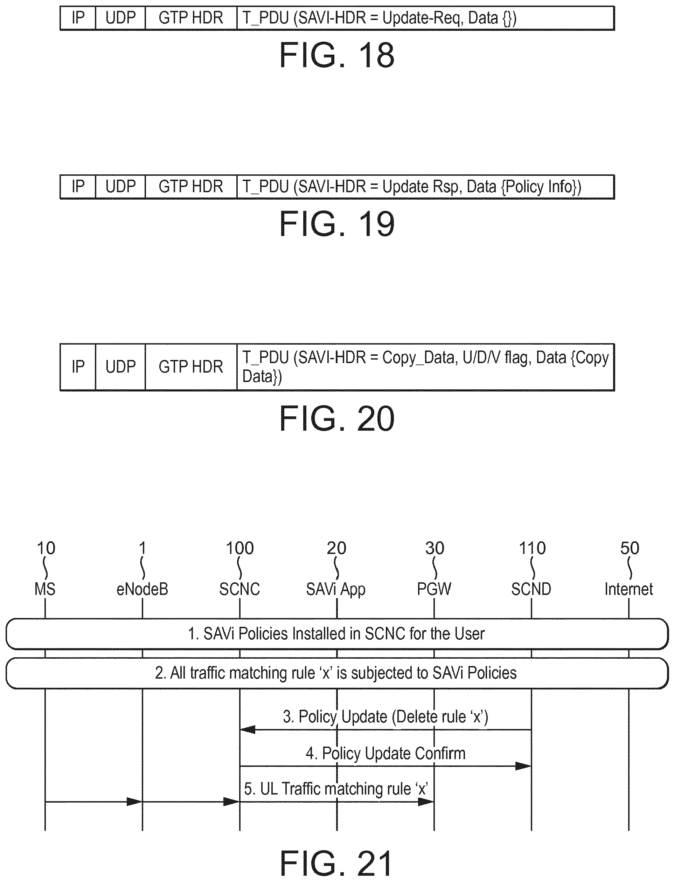

A pair of request and response messages is used and the transaction can be initiated by either the SCNC 100 (as shown in Figures 18 and 19) or the SCND 110 depending on which end has new information to report to the other. These messages are distinguished from messages carrying user data by the use of the same "special" IP addresses as used by the G-PDU based discovery procedure.

If SAVi services are changed on the SAVi Platform 1 then the SCNC 100 sends Update-Request message as in Figure 18. In response to the Update-Request message, SCND 110 save the SAVi policies and sends Update_Response message, as shown in Figure 19.

A change in SAVi services would be triggered by the addition or removal of the SAVi services.

If the SAVi services authorised for the bearer change then the SCND 110 initiates the procedure described above. The formats of the messages are the same as shown in Figures 18 and 19 except the Request carries the Policy Data. The Data field in the Response may be empty.

If a SAVi application 20A/20B is generating downlink data locally or there is a requirement for verification purposes to compare the uplink data from the UE 10 with that sent uplink by the application 20A/20B to the GGSN 30 then a copy of this user data is transferred from the SCNC 100 to the SCNSF 120 (SAVi Core Network Supporting Function) via the SCND 110. The format of the message is shown in Figure 20. The U/D/V flag indicates if the data is a copy of an uplink, downlink or verification packet. In this case the SCND 110 receives the data and passes it to the appropriate supporting function. This message could be acknowledged by the SCND 110 using the corresponding Response message although the SCNC 100 need take no action on receipt. Alternatively, the message could be left unacknowledged.

### 4.3.3. Policy Data

This is the data sent from SCND 110 to SCNC 100 in the downlink direction. The policy data specifies a set of policies that tell the SAVi client 100 how to handle flows for the particular bearer. Each policy can be specified for the whole flow or using a 5-tuple that uniquely identifies the flow (Source IP Address, Destination IP Address, Transport Protocol, Source Port, Destination Port).

The Policy Data is sent using the appropriate (Echo or G-PDU) in-band control channel described in sections 4.3.1.

**Table 1: Policy Data**

| | |
|---|---|
| Policy Data | This field contains: |
| | • Whole flow indicator or 5 tuple |
| | • policy info |
| | Policy info includes |
| | • Applications to be inserted in the data path. |
| | • Sequence of the applications to be used |
| | Additional parameters used by the apps if required |
| | • E.g. Copy of downlink data required |
| | • E.g. Service chain (order how packets pass through applications used) |

The policy may be updated midway through a session. Figure 21 shows the steps performed when such an update occurs. The following steps are shown in Figure 21.
(1) The SAVi Relationship has been established and therefore the SCNC 100 knows about the policies to be associated with this bearer. Any subsequent traffic arriving at SCNC 100 on this bearer will be subjected to these policies.
(2) Let's assume one of the flows in user-traffic is matching rule 'x' and is subjected to SAVi processing.
(3) SCND 110 initiates a SAVi Policy Update Request to SCNC 100. The message arrives at the SCNC 100 indicating user is no longer allowed to use SAVi Application associated with rule 'x'.
(4) SCNC 100 updates user policies, deletes rule 'x' association with this user and sends SAVi Policy Update Confirm message to the SCND 110.
(5) From now onwards, all traffic matching rule 'x' is not routed into SAVi App, and is instead sent directly to P-GW.

### 4.3.4. Copy Data

This is the data sent from the SCNC 100 100 to the SCND 110 110 in the uplink direction. This data is destined for the SAVi Core Network Supporting Function (SCNSF) 120 to enable proper functioning of LI and charging or for verification purposes. Upon receiving copy data for LI and charging, the SCNSF 120 injects the data in the uplink or downlink direction so that LI and charging can be performed. Injecting the received data into the normal data stream and subjecting them to the same treatment as the regular data is subject to, e.g. as traffic management, is instrumental in making the byte counts accurate in the billing records as well as towards OCS 40 and PCRF 80 as required. Later on this data is discarded by the SCND 110. The mechanism is used to label these packets so the SCND 110 recognises that they must be discarded. Copy data received for verification purposes is sent, together a copy of the normal uplink data, to a verification function.

The Copy Data is sent using the in-band control channel described in sections 4.3.1.

### 4.3.5. SAVI User Information in SCNC 100 and SCND 110

As a result of SAVi relationship establishment, SCNC 100 and SCND 110 may maintain some or all of the following information about the subscribers in their databases for each bearer. The actual information will depend on the application and privacy requirements.

**Table 2: Subscriber Data**

| | |
|---|---|
| IMSI | International Mobile Subscriber Identity - The unique subscriber identifier (use is not recommended for security reasons) |
| MSISDN | Mobile Subscriber ISDN number - This is the directory number for the subscriber (the use of an Anonymous Customer Reference (ACR) is preferred - see below) |
| IMEI(-SV) | International Mobile Equipment Identity - The unique identifier for the mobile phone itself (a shortened form identifying only the device type and software version is preferred for security reasons) |
| UE IP Address | This is the IP address assigned by the P-GW to the UE when the bearer is created |
| APN | Access Point Name - This uniquely identifies the Access Point in the P-GW to the external PDN for the bearer. If it is required to be globally unique it must consist of both the APN Network ID and the APN Operator ID |
| ACR | Anonymous Customer Reference - an obscured form of the MS-ISDN or IMSI that a third party may use to uniquely identify a customer using an application but that can only be converted back to the clear form by the network operator. |
| Bearer ID | This is used to identify the bearer. In the SCNC 100 a bearer ID comprises: Uplink TEID + TLA; downlink TEID + TLA (see note) In the SCND 110 a local identifier related to the PDN Context may be used |
| SCNC 100 ID | Unique identifier of the SCNC 100 |
| SCND 110 ID | Unique identifier of the SCND 110 |
| Policy Information | One or more 5-tuple rules to allow traffic steering into applications |

Note that a Tunnel Endpoint Identifier (TEID) in itself does not uniquely identify a tunnel in an eNodeB. The Transport Layer Address (TLA) which is the IP address of the receiving tunnel endpoint is also required. The pair, TEID+TLA, is unambiguous.

### 5. Exchange of information between the SAVi Platform and the SCND

The SAVi Platform has the capability to exchange information with the core network. As an example the exchange of service capabilities should be used. The SCND 110 and SCNC 100 manage users, e.g. by the policies or services listed in the user profile, and based on the SAVi services, applications 20, 20A, 20B available on the SAVi Platform 1. Therefore it is important that SCND 110 and SCNC 100 know which services, applications or functions 20, 20A, 20B are located on the different SAVi Platforms. The SCNC 100 creates and maintains a list or matrix containing services, applications or functions 20, 20A, 20B hosted by the platform 1. The SCND 100 is able to create and maintain a list/matrix containing e.g. available applications 20, 20A, 20B which each SAVi platform 1, with which the SCND 110 has a relationship, could offer to the user. If there is subscriber-specific data for an application, e.g. access rights, this has to be included in the user profile.

Information is exchanged between the SAVi Platform 1 and SCNC 100 by any suitable means.

In the following, an example process for creating or maintaining the SCND 110 application list/matrix will be described in more detail, with reference to Figure 22.
1. A new application 20, 20A, 20B has been installed on the SAVi Platform 1.
2. SAVi Platform 1 informs the SCNC 100 of the installation of the new application 20, 20A, 20B, which introduces the capabilities of the new application 20, 20A, 20B into its Application list/matrix.
3. The SCNC 100 uses the SAVi Information Transfer procedure (described above) to update each SCND 110 with which it currently has a relationship. If more there is more than one relationship at the same SCND 110 then the SCNC 100 may use any of these relationships. That is, an existing user plane connection is used to send the update information to the SCND 110.
4. Each SCND 110 stores the information into its application list/matrix 300.
5. The next user at the eNodeB associated with the SAVi platform 1 can use the newly implemented application 20, 20A, 20B as all the relevant information about the application 20, 20A, 20B has been exchanged between the SCNC 100 and SCND 110.

The exchange of information uses the relationship of SCNC 100 and SCND 110. This relationship is available for any user 10 connected to the SAVi Platform 1. This will be similar for the exchange of information from and to the SAVi Platform.

Further it should be noted that the SAVi Information Transfer procedure message which is not related to the specific customer has a specific Info ID which allows SCND 110 to handle the message in the correct way. A SAVi Information Transfer procedure message is distinguished from other messages (as described in previous sections) that are intended for a particular user 10. The Info ID is recognisable by the SCND 110 to identify that the message concerns an update to the applications 20, 20A, 20B hosted by a particular platform 1. This is not information specific to a particular user, but concerns changed capabilities of the platform 1. The message is therefore used by the SCND 110 to update its application list/matrix 300.

### 6. SAVi Platform 1 relation to SCNC 100 Requirements

### 6.1. SAVi Platform

SAVI Platform 1 needs to support proper functioning of SAVI architecture based on Client (SCNC 100) and Director (SCND 110) components as outlined herein. As outlined in Section 3, SCNC 100 implements the in-band control channel towards SCND 110 and then based on the per subscriber policies it controls routing the packet through the sequence of applications 20A/20B permitted for the user. In order to fulfil these functions SCNC 100 has to have visibility of all the uplink and downlink user traffic. Additionally, based on policies received from SCND 110, SCNC 100 needs to be able to control how packets are routed through the SAVi applications 20A/20B via the SAVi specific functions 200 on the SAVi Platform 1. Therefore the SAVi functions on the SAVi Platform 1 are responsible for routing. Furthermore for system resiliency, flexibility and extensibility when new applications 20A/20B are added, a separation between SCNC 100 and SAVI Applications 20A/20B has to be provided. Also a separation between SAVi applications 20A/20B themselves is needed. SAVi functions 200 on the SAVi Platform 1 need to be able to route the packet between various applications 20A/20B as directed by SCNC 100. Virtualized environment is one of the examples of practical implementation of a system with these properties.

### 6.2. User Data path

The SAVi compliant platform 1 always sends the user related packets to the SCNC 100. This applies to the user data packets in both uplink and downlink directions. Since both uplink and downlink user packets are exchanged between the SCNC 100 and the SAVi Platform 1, either two interfaces are needed (to/from UE 10 and from/to S-GW) or the direction (uplink or downlink) of each user packet needs to be indicated explicitly by a tag.

The SCNC 100 and the applications 20A/20B need to know the association between the uplink and downlink tunnels that constitute each bearer. In an eNodeB 10 the 4-tuple, (Uplink TEID + TLA; downlink TEID + TLA) uniquely identifies a bearer. Either the uplink or downlink pair is already present in the IP and GTP headers. The other pair could be provided in a tag. Alternatively the SAVi Platform 1 could send the 4-tuple over a separate control interface when the bearer is created.

Note that a Tunnel Endpoint Identifier (TEID) in itself does not uniquely identify a tunnel in an eNodeB. The Transport Layer Address (TLA) which is the IP address of the receiving tunnel endpoint is also required. (The pair, TEID+TLA, is unambiguous.)

### 6.3. SAVi in-band control

The packets destined to the SCNC 100 are recognized by the special signature that depends on the in-band control mechanism described in this specification. These packets are sent to the SCNC 100. If there is no SCNC 100 present they will be discarded by the UE 10.

Note that there may be overlapping UE IP-Addresses on the SAVi Platform 1 in that it is possible for two bearers to have the same UE IP address. Therefore applications need to handle ID tagging of IP packets with the above-mentioned tunnel identification as a mandatory requirement.

The section headings and numbering used in this description are for ease of reference, and should not be interpreted as limiting the scope of the invention.

## Claims

1. A mobile telecommunications network including:
a network core (30) operable to provide core network functions; and
a radio access network having
radio means for wireless communication with mobile terminals (10) registered with the telecommunications network, and
control means (1) operable to host a plurality of applications (20, 20A, 20B) for use by users of the mobile terminals (10), each application having respective capabilities;
wherein the control means (1) includes a client function (100) and the network core (30) includes a director function operable to communicate with the client function (100);
wherein the control means (1) is operable to exchange information with the network core (30), the information comprising the capabilities of the applications (20, 20A, 20B) hosted by the control means (1); and
wherein the director function (110) is operable to provide the client function (100) with respective policy data which specifies how requests relating to respective ones of the mobile terminals (10) are handled by the control means (1), which policy data is dependent upon the capabilities of the applications (20, 20A, 20B) hosted by the control means (1).

2. The network of claim 1, wherein the client function (100) and the director function (110) are operable to provide the director function (110) with the information comprising the capabilities of the applications (20, 20A, 20B).

3. The network of claim 1 or 2, wherein the client function (100) is operable to provide the director function (110) with the information comprising the capabilities of the applications (20, 20A, 20B) hosted by the control means (1) when the applications (20, 20A, 20B) hosted by the control means (1) change.

4. The network of claim 1, 2 or 3, wherein the information comprising the capabilities of the applications (20, 20A, 20B) is transmitted in a GTP-U communication session.

5. The network of any one of the preceding claims, wherein the information comprising the capabilities of the applications (20, 20A, 20B) is transmitted over an existing control channel between the client function (100) and the director function (110) established for one of the mobile terminals (10).

6. A method of operating a mobile telecommunications network including:
operating a network core (30) to provide core network functions; and
operating a radio access network to
wirelessly communicate with mobile terminals (10) registered with the telecommunications network using radio means, and
host a plurality of applications (20, 20A, 20B) on control means (1) for use by users of the mobile terminals (10), each application having respective capabilities;
wherein the control means (1) includes a client function (100) and the network core (30) includes a director function that communicates with the client function (100);
wherein the control means (1) exchanges information with the network core (30), the information comprising the capabilities of the applications (20, 20A, 20B) hosted by the control means (1); and
wherein the director function (110) provides the client function (100) with respective policy data which specifies how requests relating to respective ones of the mobile terminals (10) are handled by the control means (1), which policy data is dependent upon the capabilities of the applications (20, 20A, 20B) hosted by the control means (1).

7. The method of claim 6, wherein the client function (100) and the director function (110) provide the director function (110) with the information comprising the capabilities of the applications (20, 20A, 20B) hosted by the control means.

8. The method of claim 6 or 7, wherein the client function (100) provides the director function (110) with the information comprising capabilities of the applications (20, 20A, 20B) hosted by the control means (1) when the applications (20, 20A, 20B) hosted by the control means (1) change.

9. The method of claim 6, 7 or 8, wherein the information comprising the capabilities of the applications (20, 20A, 20B) is transmitted in a GTP-U communication session.

10. The method of any one of claims 6 to 9, wherein the information comprising the capabilities of the applications (20, 20A, 20B) is transmitted over an existing control channel between the client function (100) and the director function (110) established for one of the mobile terminals (10).

## Patentansprüche

1. Mobiltelekommunikationsnetzwerk, das Folgendes beinhaltet:
einen Netzwerkkern (30), der betriebsfähig ist, um Kernnetzwerkfunktionen bereitzustellen; und
ein Funkzugriffsnetzwerk, das Folgendes aufweist:
ein Funkmittel zur drahtlosen Kommunikation mit Mobilendgeräten (10), die in dem Telekommunikationsnetzwerk registriert sind, und
ein Steuerungsmittel (1), das betriebsfähig ist, um eine Vielzahl von Anwendungen (20, 20A, 20B) zur Verwendung durch Benutzer der Mobilendgeräte (10) zu hosten, wobei jede Anwendung jeweilige Fähigkeiten aufweist;
wobei das Steuerungsmittel (1) eine Client-Funktion (100) beinhaltet und der Netzwerkkern (30) eine Direktorfunktion beinhaltet, die betriebsfähig ist, um mit der Client-Funktion (100) zu kommunizieren;
wobei das Steuerungsmittel (1) betriebsfähig ist, um Informationen mit dem Netzwerkkern (30) auszutauschen, wobei die Informationen die Fähigkeiten der Anwendungen (20, 20A, 20B) umfassen, die durch das Steuerungsmittel (1) gehostet werden; und
wobei die Direktorfunktion (110) betriebsfähig ist, um die Client-Funktion (100) mit jeweiligen Richtliniendaten bereitzustellen, die spezifizieren, wie Anfragen bezüglich jeweiliger der Mobilendgeräte (10) durch das Steuerungsmittel (1) gehandhabt werden, wobei die Richtliniendaten von den Fähigkeiten der Anwendungen (20, 20A, 20B) abhängig sind, die durch das Steuerungsmittel (1) gehostet werden.

2. Netzwerk nach Anspruch 1, wobei die Client-Funktion (100) und die Direktorfunktion (110) betriebsfähig sind, um die Direktorfunktion (110) mit den Informationen bereitzustellen, die die Fähigkeiten der Anwendungen (20, 20A, 20B) umfassen.

3. Netzwerk nach Anspruch 1 oder 2, wobei die Client-Funktion (100) betriebsfähig ist, um die Direktorfunktion (110) mit den Informationen bereitzustellen, die die Fähigkeiten der Anwendungen (20, 20A, 20B) umfassen, die durch das Steuerungsmittel (1) gehostet, wenn sich die Anwendungen (20, 20A, 20B), die durch das Steuerungsmittel (1) gehostet werden, ändern.

4. Netzwerk nach Anspruch 1, 2 oder 3, wobei die Informationen, die die Fähigkeiten der Anwendungen (20, 20A, 20B) umfassen, in einer GTP-U-Kommunikationssitzung übertragen werden.

5. Netzwerk nach einem der vorhergehenden Ansprüche, wobei die Informationen, die die Fähigkeiten der Anwendungen (20, 20A, 20B) umfassen, über einen existierenden Steuerungskanal zwischen der Client-Funktion (100) und der Direktorfunktion (110), der für eines der Mobilendgeräte (10) eingerichtet ist, übertragen werden.

6. Verfahren zum Betreiben eines Mobiltelekommunikationsnetzwerks, das Folgendes beinhaltet:
Betreiben eines Netzwerkkerns (30), um Kernnetzwerkfunktionen bereitzustellen; und
Betreiben eines Funkzugriffsnetzwerks, um mit Mobilendgeräten (10), die in dem Telekommunikationsnetzwerk registriert sind, unter Verwendung eines Funkmittels drahtlos zu kommunizieren, und
Hosten einer Vielzahl von Anwendungen (20, 20A, 20B) auf einem Steuerungsmittel (1) zur Verwendung durch Benutzer der Mobilendgeräte (10), wobei jede Anwendung jeweilige Fähigkeiten aufweist;
wobei das Steuerungsmittel (1) eine Client-Funktion (100) beinhaltet und der Netzwerkkern (30) eine Direktorfunktion beinhaltet, die mit der Client-Funktion (100) kommuniziert;
wobei das Steuerungsmittel (1) Informationen mit dem Netzwerkkern (30) austauscht, wobei die Informationen die Fähigkeiten der Anwendungen (20, 20A, 20B) umfassen, die durch das Steuerungsmittel (1) gehostet werden; und
wobei die Direktorfunktion (110) die Client-Funktion (100) mit jeweiligen Richtliniendaten bereitstellt, die spezifizieren, wie Anfragen bezüglich jeweiliger der Mobilendgeräte (10) durch das Steuerungsmittel (1) gehandhabt werden, wobei die Richtliniendaten von den Fähigkeiten der Anwendungen (20, 20A, 20B) abhängig sind, die durch das Steuerungsmittel (1) gehostet werden.

7. Verfahren nach Anspruch 6, wobei die Client-Funktion (100) und die Direktorfunktion (110) die Direktorfunktion (110) mit den Informationen bereitzustellen, die die Fähigkeiten der Anwendungen (20, 20A, 20B) umfassen, die durch das Steuerungsmittel gehostet werden.

8. Verfahren nach Anspruch 6 oder 7, wobei die Client-Funktion (100) die (110) Direktorfunktion mit den Informationen bereitstellt, die Fähigkeiten der Anwendungen (20, 20A, 20B) umfassen, die durch das Steuerungsmittel (1) gehostet werden, wenn sich die Anwendungen (20, 20A, 20B), die durch das Steuerungsmittel (1) gehostet werden, ändern.

9. Verfahren nach Anspruch 6, 7 oder 8, wobei die Informationen, die die Fähigkeiten der Anwendungen (20, 20A, 20B) umfassen, in einer GTP-U-Kommunikationssitzung übertragen werden.

10. Verfahren nach einem der Ansprüche 6 bis 9, wobei die Informationen, die die Fähigkeiten der Anwendungen (20, 20A, 20B) umfassen, über einen existierenden Steuerungskanal zwischen der Client-Funktion (100) und der Direktorfunktion (110), der für eines der Mobilendgeräte (10) eingerichtet ist, übertragen werden.

## Revendications

1. Un réseau de télécommunications mobile comprenant :
un cœur de réseau (30) conçu de façon à fournir des fonctions de réseau de cœur, et
un réseau d'accès radio possédant
un moyen radio destiné à une communication sans fil avec des terminaux mobiles (10) enregistrés auprès du réseau de télécommunications, et
un moyen de commande (1) conçu de façon à héberger une pluralité d'applications (20, 20A, 20B) destinées à une utilisation par des utilisateurs des terminaux mobiles (10), chaque application possédant des capacités respectives,
où le moyen de commande (1) comprend une fonction client (100) et le cœur de réseau (30) comprend une fonction directeur conçue de façon à communiquer avec la fonction client (100),
où le moyen de commande (1) est conçu de façon à échanger des informations avec le cœur de réseau (30), les informations comprenant les capacités des applications (20, 20A, 20B) hébergées par le moyen de commande (1), et
où la fonction directeur (110) est conçue de façon à fournir à la fonction client (100) des données de politique respectives qui spécifient la manière dont des demandes relatives à des terminaux respectifs des terminaux mobiles (10) sont gérées par le moyen de commande (1), lesdites données de politique dépendant des capacités des applications (20, 20A, 20B) hébergées par le moyen de commande (1).

2. Le réseau selon la Revendication 1, où la fonction client (100) et la fonction directeur (110) sont conçues de façon à fournir à la fonction directeur (110) les informations comprenant les capacités des applications (20, 20A, 20B).

3. Le réseau selon la Revendication 1 ou 2, où la fonction client (100) est conçue de façon à fournir à la fonction directeur (110) les informations comprenant les capacités des applications (20, 20A, 20B) hébergées par le moyen de commande (1) lorsque les applications (20, 20A, 20B) hébergées par le moyen de commande (1) sont modifiées.

4. Le réseau selon la Revendication 1, 2 ou 3, où les informations comprenant les capacités des applications (20, 20A, 20B) sont transmises dans une session de communication GTP-U.

5. Le réseau selon l'une quelconque des Revendications précédentes, où les informations comprenant les capacités des applications (20, 20A, 20B) sont transmises par l'intermédiaire d'un canal de commande existant entre la fonction client (100) et la fonction directeur (110) établi pour un des terminaux mobiles (10).

6. Un procédé d'actionnement d'un réseau de télécommunications mobile comprenant :
l'actionnement d'un cœur de réseau (30) de façon à fournir des fonctions de réseau de cœur, et
l'actionnement d'un réseau d'accès radio de façon à
communiquer de manière non filaire avec des terminaux mobiles (10) enregistrés auprès du réseau de télécommunications au moyen d'un moyen radio, et
héberger une pluralité d'applications (20, 20A, 20B) sur un moyen de commande (1) destinées à une utilisation par des utilisateurs des terminaux mobiles (10), chaque application possédant des capacités respectives,
où le moyen de commande (1) comprend une fonction client (100) et le cœur de réseau (30) comprend une fonction directeur qui communique avec la fonction client (100),
où le moyen de commande (1) échange des informations avec le cœur de réseau (30), les informations comprenant les capacités des applications (20, 20A, 20B) hébergées par le moyen de commande (1), et
où la fonction directeur (110) fournit à la fonction client (100) des données de politique respectives qui spécifient la manière dont des demandes relatives à des terminaux respectifs des terminaux mobiles (10) sont gérées par le moyen de commande (1), lesdites données de politique dépendant des capacités des applications (20, 20A, 20B) hébergées par le moyen de commande (1).

7. Le procédé selon la Revendication 6, où la fonction client (100) et la fonction directeur (110) fournissent à la fonction directeur (110) les informations comprenant les capacités des applications (20, 20A, 20B) hébergées par le moyen de commande.

8. Le procédé selon la Revendication 6 ou 7, où la fonction client (100) fournit à la fonction directeur (110) les informations comprenant les capacités des applications (20, 20A, 20B) hébergées par le moyen de commande (1) lorsque les applications (20, 20A, 20B) hébergées par le moyen de commande (1) sont modifiées.

9. Le procédé selon la Revendication 6, 7 ou 8, où les informations comprenant les capacités des applications (20, 20A, 20B) sont transmises dans une session de communication GTP-U.

10. Le procédé selon l'une quelconque des Revendications 6 à 9, où les informations comprenant les capacités des applications (20, 20A, 20B) sont transmises par l'intermédiaire d'un canal de commande existant entre la fonction client (100) et la fonction directeur (110) établi pour un des terminaux mobiles (10).
